Europäisches Patentamt

European Patent Office

Office européen des brevets

(11) Veröffentlichungsnummer: **0 233 655**
**A2**

(12) **EUROPÄISCHE PATENTANMELDUNG**

(21) Anmeldenummer: **87102466.7**

(22) Anmeldetag: **21.02.87**

(51) Int. Cl.⁴: **A22B 5/16**

(30) Priorität: **21.02.86 DE 3605678**

(43) Veröffentlichungstag der Anmeldung:
**26.08.87 Patentblatt 87/35**

(84) Benannte Vertragsstaaten:
**DE ES FR NL**

(71) Anmelder: **Banss Maschinenfabrik GmbH & Co. KG**
**Industriestrasse**
**D-3560 Biedenkopf(DE)**

(72) Erfinder: **Rademacher, Rolf-Diether**
**Schillerweg 8**
**D-3560 Biefenkopf(DE)**
Erfinder: **Kaufmann, Sigfried**
**Hauptstrasse 19**
**D-3563 Dautphental/Dautphe(DE)**

(74) Vertreter: **Klunker . Schmitt-Nilson . Hirsch**
**Winzererstrasse 106**
**D-8000 München 40(DE)**

(54) **Hilfsvorrichtung beim Enthäuten von Schlachttieren.**

(57) Hilfvorrichtung beim Enthäuten von hängenden Schlachttieren, insbesondere Rindern, die eine mechanisierte Beineinklemmeinrichtung (10) für die beiden herabhängenden Vorderbeine (36) des jeweiligen Schlachttiers (2) aufweist.

FIG. 1

EP 0 233 655 A2

## "Hilfsvorrichtung beim Enthäuten von Schlachttieren"

Die Erfindung bezieht sich auf eine Hilfsvorrichtung beim Enthäuten von in der Regel an den Hinterbeinen hängenden Schlachttieren, insbesondere Rindern.

Das Enthäuten von Schlachttieren geschieht heutzutage zumeist mit mechanisierten Vorrichtungen, die Enthäuter genannt werden. Dabei wird dem jeweiligen Schlachttier die Haut fortschreitend allmählich von dem Körper abgezogen, wobei der zuständige Schlachter den Enthäutungsvorgang überwacht und erforderlichenfalls durch trennende Schnitte zwischen der Haut und dem Tierkörper unterstützt. Enthäutungen nach dem Stand der Technik laufen nicht immer problemlos ab. Zu den häufigsten Problemen gehören Hautabziehstörungen, die durch Pendelbewegungen des hängenden Schlachttierkörpers unter der Wirkung des Enhäuters stattfinden, und ein Abreißen der Wirbelsäule des jeweiligen Schlachttiers meist im Bereich der Lendenwirbel, unter der Wirkung der erheblichen Hautabzugskräfte.

Der Erfindung liegt die Aufgabe zugrunde, für ein störungsfreieres, möglichst wenig arbeitsaufwendiges Enthäuten von Schlachttieren zu sorgen.

Gemäß einer ersten Lösung dieser Aufgabe ist erfindungsgemäß eine mechanisierte Beineinklemmeinrichtung für die beiden herabhängenden Vorderbeine des jeweiligen Schlachttiers vorgesehen.

Mit der erfindungsgemäßen, mechanisierten Beineinklemmeinrichtung läßt sich eine weitestgehende Ruhigstellung des jeweiligen Schlachttierkörpers beim Enthäutungsvorgang erreichen. Aufgrund dieser Ruhigstellung läuft der Enthäutungsvorgang sehr gleichmäßig und ohne zusätzliche Kraftausübungen auf die abzuziehende Haut aufgrund von Schlachttierbewegungen ab. Allfällige Korrektureingriffe oder Schnitthilfen eines Schlachters reduzieren sich auf ein Minimum. Da die Beineinklemmeinrichtung mechanisiert arbeitet, sind arbeitsaufwendige Schritte zur Fixierung der herabhängenden Vorderbeine des Schlachttiers nicht erforderlich.

Die erfindungsgemäße Beineinklemmeinrichtung weist vorzugsweise Beineinklemmelemente auf, die zwischen einer Offenstellung und einer Schließstellung, vorzugsweise mittels einer Zylinder-Kolben-Einheit, bewegbar sind und mit den Vorderbeinen in klemmenden Eingriff bringbar sind. Bevorzugte Ausgestaltungen dieser Klemmelemente als Klemmbacke/ Widerlagerbacke oder Klemmarmpaar/ Widerlagerteil mit Ausbuchtung sind in den Ansprüchen 2 bis 4 angegeben und weiter unten bei den Ausführungsbeispielen noch näher erläutert.

Vorzugsweise sind die Einklemmelemente an einem Klemmkopf vorgesehen. Es ist bevorzugt, den Klemmkopf aufwärts und abwärts und/oder quer zu einer Weiterbewegungsrichtung der Schlachttiere verfahrbar zu machen. Auf diese Weise kann man die Beineinklemmelemente bzw. den Klemmkopf in die für das jeweilige Schlachttier passende Position verfahren und bei entsprechender Ausgestaltung eine nach oben gerichtete Kraft auf den Schlachttierkörper ausüben, um die Schlachttieraufhängung zu entlasten.

Gemäß der in Anspruch 6 angegebenen Ausgestaltung der Erfindung kann man den Klemmkopf in einer Weiterbewegungsrichtung der Schlachttiere verfahren. In diesem Zusammenhang muß man sich vor Augen halten, daß in modernen, großen Schlachthöfen das Enthäuten von Schlachttieren während deren Bewegung längs einer Weiterbewegungsbahn erfolgt. Diese Ausgestaltung der Erfindung stellt somit sicher, daß bei diesem modernen Verfahrensablauf die erfindungsgemäße Beineinklemmeinrichtung eingesetzt werden kann.

Gemäß einer zweiten Lösung der oben herausgestellten Aufgabe ist erfindungsgemäß eine mechanisierte Elektrodenansetzeinrichtung vorgesehen, mit der sich mindestens eine Elektrode im Rückenbereich des jeweiligen Schlachttiers ansetzen läßt. Auf diese Weise läßt sich der Effekt, daß ein Hindurchleiten von Strom durch geeignete Schlachttierkörperbereiche während des Enthäutens eine Erhöhung der dortigen Muskelspannung zur Folge hat und dadurch einem Abreißen der Wirbelsäule entgegengewirkt wird, nutzen, ohne daß Elektroden arbeitsaufwendig von Hand angesetzt werden müßten. Diese zweite erfindungsgemäße Lösung kann vorteilhaft mit der weiter vorn angegebenen, ersten erfindungsgemäßen Lösung kombiniert sein, um den Enthäutungsvorgang insgesamt zu perfektionieren.

Vorzugsweise ist die mechanisiert anzusetzende Elektrode oder sind die mechanisiert anzusetzenden Elektroden an einem Elektrodenkopf angeordnet. Dieser kann vorteilhaft von einem Arm getragen sein, der um eine Achse zu dem jeweiligen Schlachttierkörper hin und von diesem fort - schwenkbar ist.

Der Elektrodenkopf kann gemäß Anspruch 10 vorzugsweise aufwärts und abwärts verfahrbar sein, um ihn in die für das jeweilige Schlachttier passende Arbeitsposition zu bringen.

Gemäß Anspruch 11 kann der Elektrodenkopf in einer Weiterbewegungsrichtung der Schlachttiere bewegbar sein. Hier kommen ebenfalls diejenigen Gesichtspunkte zum Tragen, die vorstehend bei der analogen Bewegungsmöglichkeit der Beineinklemmeinrichtung geschildert worden sind.

Um die Beineinklemmeinrichtung und/oder die Elektrodenansetzeinrichtung einfacher oder sogar automatisch auf die für das jeweilige Schlachttier passende, höhenmäßige Arbeitsposition bringen zu können, ist in Weiterbildung der Erfindung eine Tierkörperlängenfeststelleinrichtung vorgesehen.

Insgesamt ist darauf hinzuweisen, daß die erfindungsgemäßen Hilfsvorrichtungen in ihrem Arbeitsablauf von Hand gesteuert sein können oder teilautomatisch gesteuert sein können oder vollautomatisch gesteuert sein können.

Die in den Ansprüchen und im Zusammenhang mit den nachfolgenden Ausführungsbeispielen angesprochenen Zylinder-Kolben-Einheiten können jeweils pneumatisch oder, was bevorzugt ist, hydraulisch betrieben sein.

Die Erfindung und Ausgestaltungen der Erfindung werden mit weiteren Einzelheiten anhand zeichnerisch dargestellter Ausführungsbeispiele noch näher erläutert.
Es zeigen:

Fig. 1 eine Ansicht einer Beineinklemmeinrichtung, gesehen in Weiterbewegungsrichtung der Schlachttierkörper;

Fig. 2 eine Draufsicht gemäß II in Fig.1 auf die Beineinklemmelemente der Beineinklemmeinrichtung von Fig.1;

Fig. 3 eine Draufsicht analog wie Fig.2, jedoch auf eine weitere Ausführungsform von Beineinklemmelementen der Beineinklemmeinrichtung;

Fig. 4 eine Ansicht einer Elektrodenansetzeinrichtung, gesehen in Weiterbewegungsrichtung der Schlachttierkörper wie in Fig.1.

Bei den beschriebenen Ausführungsbeispielen sind als Schlachttiere Rinder dargestellt. Das Enthäuten selbst erfolgt mit einem herkömmlichen Enthäuter und ist nicht explicit dargestellt. Die zeichnerischen Darstellungen und die nachfolgende Beschreibung sind vielmehr auf die erfindungsgemäßen Hilfsvorrichtungen beim Enthäuten der Rinder konzentriert.

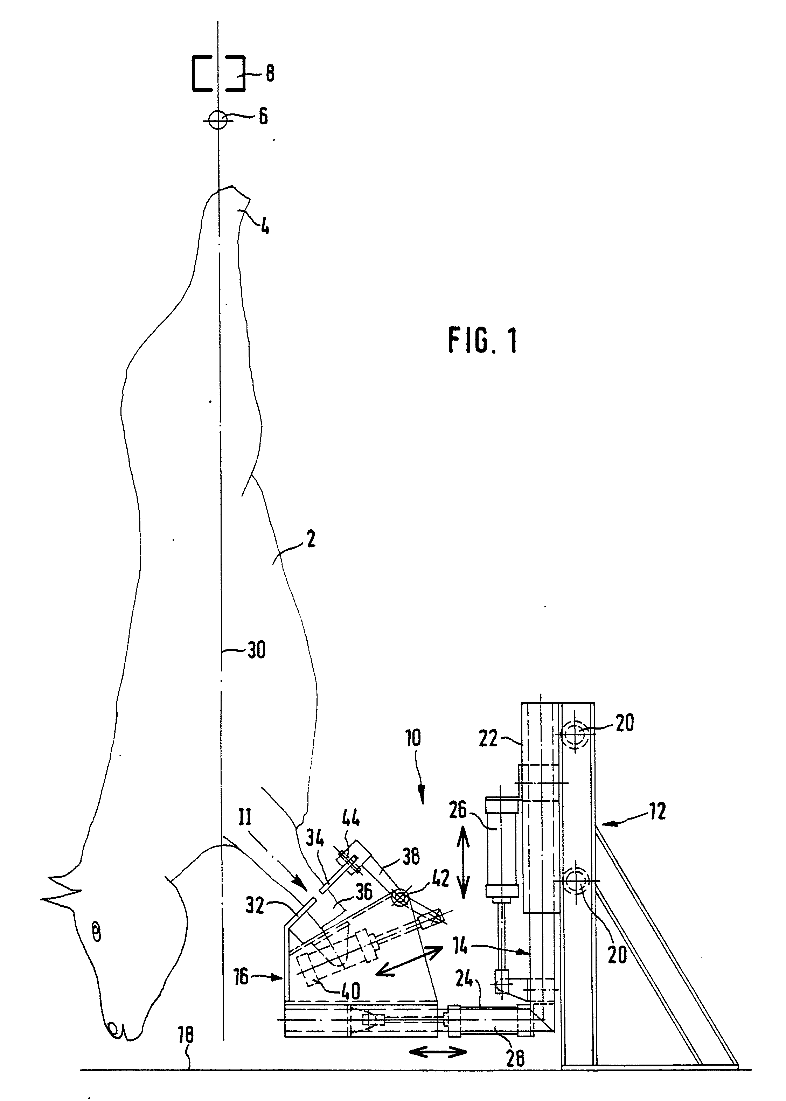

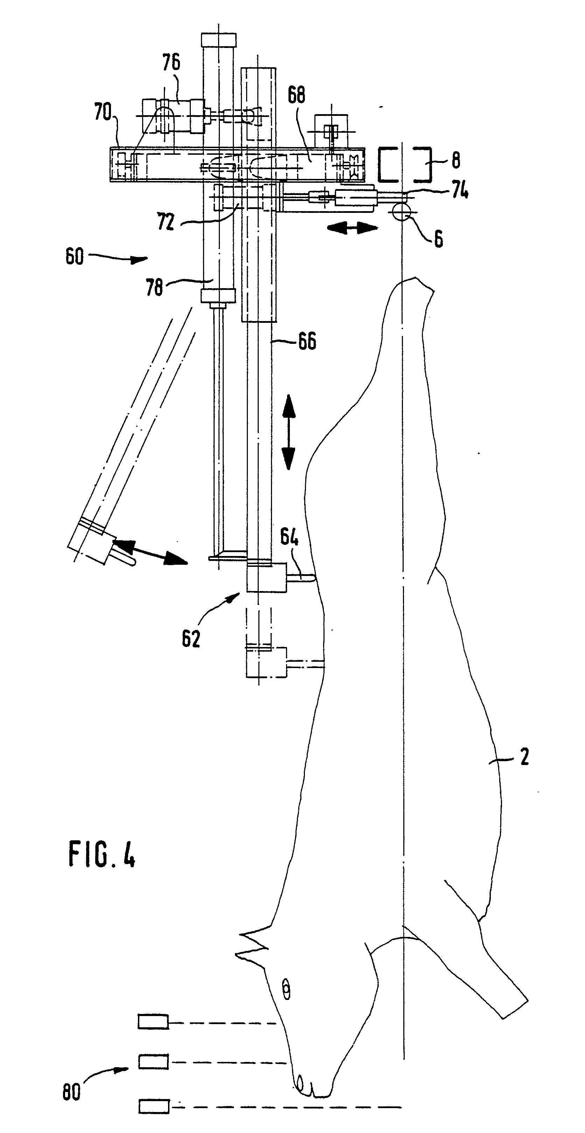

In den Figuren 1 und 4 erkennt man ein kopfunten hängendes, bereits abgestochenes Rind 2, das an den beiden Hinterbeinen 4 jeweils mit einem nicht dargestellten Traghaken an einer Rohrbahn 6 aufgehängt ist. Oberhalb der Rohrbahn 6 befindet sich eine Führung 8 für eine nicht dargestellte Förderkette, die mittels Mitnehmern die Traghaken längs der Rohrbahn 6 weiterzieht, und zwar senkrecht zur Zeichenebene der Figuren 1 und 4 von vorn nach hinten.

Die in Fig.1 rechts-unten gezeichnete Beineinklemmeinrichtung 10 besteht im wesentlichen aus einer aufrechten, abgestrebten, auf dem Schlachthofboden 18 montierten Basis 12, einem von der Basis 12 getragenen Wagen 14 und einem von dem Wagen 14 getragenen Klemmkopf 16. Die Basis 12 hat eine derartige Länge in Weiterbewegungsrichtung des Rinds 2, daß der Wagen 14 während des Enthäutungsvorgangs mitfahren kann. Zu diesem Zweck weist die Basis 12 zwei in Rind-Weiterbewegungsrichtung verlaufende Rundstangen 20 auf, längs denen sich der Wagen 14 bewegen kann. Der Wagen 14 besteht im wesentlichen aus einem Basisteil 22 und einem Ansatzteil 24, wobei das Basisteil 22 an den Rundstangen 20 sitzt und das Ansatzteil 24 nach unten von dem Basisteil 22 fortragt und unten in Richtung zum Rind 2 abgeknickt ist. In einer Blickrichtung quer zur Blickrichtung der Fig.1 hat das Basisteil 22 des Wagens 14 im wesentlichen die Form von zwei senkrechten, hohlen, miteinander verbundenen Säulen, während das Ansatzteil 24 des Wagens 14 im wesentlichen die Form von zwei rechtwinklig abgebogenen Stangen hat, die parallel zueinander angeordnet und verbunden sind, wobei die aufragenden Stangenschenkel mit ihrem Endbereich in den genannten, hohlen Säulen des Basisteils 22 aufgenommen sind.

Die waagerechten, zum Rind 2 weisenden Endbereiche des Ansatzteils 24 bzw. der geschilderten Stangen ragen in zwei entsprechende Bohrungen im unteren Bereich des Klemmkopfes 16. Zwischen dem Basisteil 22 und dem Ansatzteil 24 wirkt eine erste Zylinder-Kolben-Einheit 26, die das Ansatzteil 24 relativ zu dem Basisteil 22 in Vertikalrichtung aufwärts und abwärts bewegen kann. Zwischen dem Ansatzteil 24 und dem Klemmkopf 16 wirkt eine zweite Zylinder-Kolben-Einheit 28, die den Klemmkopf 16 relativ zu dem Ansatzteil 24 des Wagens 14 waagerecht in Richtung zu der Vertikallinie 30 durch den Schwerpunkt des Rinds 2 hin und davon weg bewegen kann.

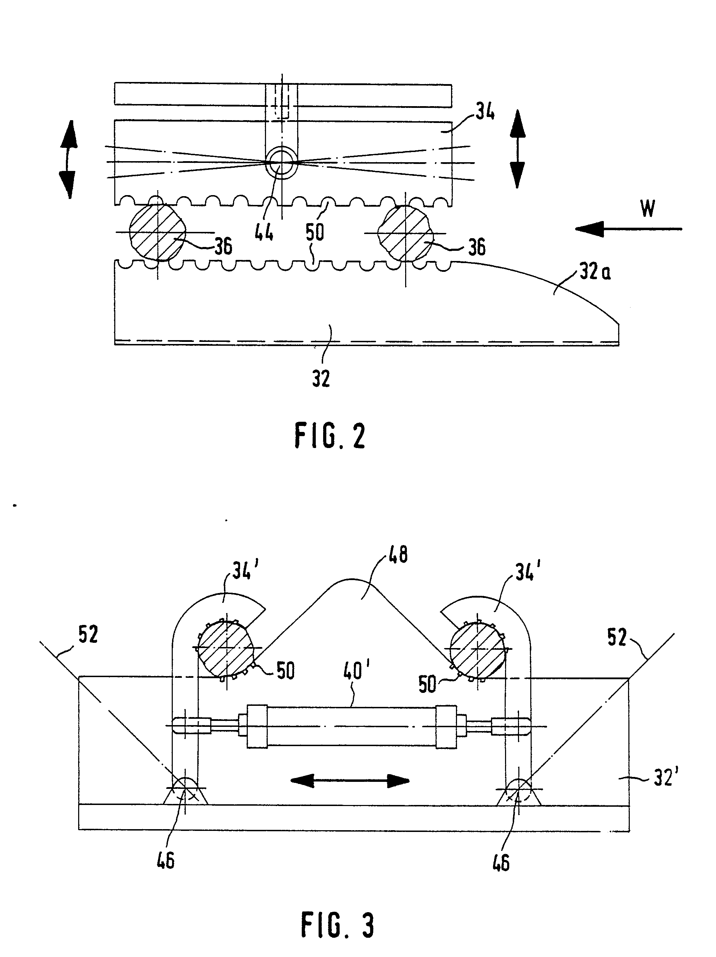

Der Klemmkopf 16 weist Klemmelemente auf, die im Fall des Ausführungsbeispiels der Fig.1/2 als Widerlagerbacke 32 und Klemmbacke 34 ausgebildet sind (besonders deutlich erkennbar in Fig.2). Die Backen 32 und 34 sind, grob gesprochen, plattenförmig und unter etwa 50 bis 80°, insbesondere in der Gegend von 75°, zum Schlachthofboden 18 derart schräg angeordnet, daß ihre Ebene im wesentlichen rechtwinklig zur Erstreckungsrichtung der schräg nach unten auf die Beineinklemmeinrichtung 10 zu hängenden Vorderbeine 36 ist. Während die Widerlagerbacke 32 ortsfest am Klemmkopf 16 angeordnet ist, ist die Klemmbacke 34 von einem zweiarmigen Hebel 38 getragen, der mittels einer dritten Zylinder-Kolben-Einheit 40 um eine Achse 42 schwenkbar ist, die parallel zur Weiterbewegungsrichtung des Rinds 2 verläuft. Die Befestigung der Klemmbacke 34 an dem Hebel 38 ist mittels eines Gelenks 44 vorgenommen, dessen Gelenkachse im wesentlichen rechtwinklig zur Ebene der Klemmbacke 34 und somit im wesentlichen parallel zur Erstreckungsrichtung der beiden Vorderbeine 36 des Rinds 2 ist.

Die Funktionsweise der Beineinklemmeinrichtung ist die folgende:

Zunächst befindet sich der Wagen 14 ortsfest am Anfang seiner Bewegungsstrecke längs der Rundstangen 20. Ein in Richtung des Pfeils W (Fig.2) ankommendes Rind 2 rutscht mit seinen beiden herabhängenden Vorderbeinen 36 über das abgerundete Ende 32a der Widerlagerbacke, während sich die Klemmbacke 34 in ihrer Öffnungsstellung befindet, die erreicht wird, wenn der Hebel 38 in Fig.1 im Uhrzeigersinn mitsamt der Klemmbacke 34 geschwenkt wird. Wenn beide Vorderbeine 36 über den abgerundeten Endbereich 32a gerutscht sind, wird die Klemmbacke 34 in ihre Schließstellung geschwenkt, und zwar durch Schwenken des Hebels 38 entgegen dem Uhrzeigersinn in Fig.1, bis die beiden Vorderbeine 36 zwischen der Widerlagerbacke 32 und der Klemmbacke 34 fest eingeklemmt sind. Die Schwenkmöglichkeit der Klemmbacke 34 um die Gelenkachse 44 um einen gewissen Winkelbetrag ermöglicht dabei ein selbsttätiges Einstellen der Klemmbacke 34 auf die anatomischen Verhältnisse der beiden Vorderbeine 36. Die Flächen der Widerlagerbacke 32 und der Klemmbacke 34, die mit den Vorderbeinen 36 in Eingriff kommen, sind mit Rinnen 50 im wesentlichen quer zur Plattenebene versehen, um ein zusätzliches, formschlüssiges Greifen der Vorderbeine 36 sicherzustellen. Ab dem Moment, wo die beiden Backen 32 und 34 geschlossen worden sind, wird der Wagen 14 mitsamt Klemmkopf 16 von dem sich weiterbewegenden Rind 2 längs der Rundstangen 20 mitgenommen, und zwar so lange, bis der Enthäutungsvorgang beendet ist. Anschließend daran wird die Klemmbacke 34 wieder in ihre Öffnungsstellung geschwenkt. Die Mitnahme des Wagens 14 hört auf. Die Vorderbeine 36 rutschen in Pfeilrichtung W von der Widerlagerbacke 32 zu deren anderem Ende hin ab. Eine nicht dargestellte, vierte Zylinder-Kolben-Einheit bewegt den Wagen 14 zum Ausgangspunkt zurück.

Man erkennt, daß mittels der geschilderten Bewegungsmöglichkeiten zwischen Ansatzteil 24 und Basisteil 22 sowie zwischen Klemmkopf 16 und Ansatzteil 24 eine Einstellung Backen 32 und 34 in etwa auf die Position der Vorderbeine 36 möglich ist.

Die in Fig.3 dargestellte Ausführungsform unterscheidet sich zunächst durch die Gestaltung der Beineinklemmelemente von der bisher beschriebenen Ausführungsform. Statt der Widerlagerbacke 32 ist ein Widerlagerteil 32', und statt der Klemmbacke 34 sind zwei Klemmarme 34' vorgesehen. Das Widerlagerteil 32' ist wiederum im wesentlichen plattenförmg und so räumlich ausgerichtet, wie für die Widerlagerbacke 32 bereits beschrieben. Die beiden Klemmarme 34' sind um Achsen 46 schwenkbar an dem Widerlagerteil 32' gelagert, wobei die Schwenkachsen 46 im wesentlichen rechtwinklig zur Plattenebene des Widerlagerteils 32' verlaufen. Auf seiner den Vorderbeinen 36 zugewandten Seite weist das Widerllagerteil 32' in seiner Mitte eine Ausbuchtung 48 auf, die in der Sicht der Fig.3 im wesentlichen eine abgerundet-dreieckige Gestalt hat. Zwischen den beiden Klemmarmen 34' wirkt eine Zylinder-Kolben-Einheit 40', die die beiden Klemmarme schwenkend aufeinander zu und annähernd an die Flanken der Ausbuchtung 48 bewegen kann und umgekehrt. Bei jedem Klemmarm 34' ist das freie Ende um etwa 120° kreisbogenförmig zur Ausbuchtung 48 hin gekrümmt. Wenn die beiden Klemmmarme 34' in die in Fig.3 gezeichnete Schließstellung zusammengeschwenkt sind, klemmen sie die beiden Vorderbeine 36 des entsprechenden Rinds 2 jeweils zwischen der Wurzel der Ausbuchtung 48 und dem gekrümmten Klemmarm-Endbereich ein, wobei wiederum Rinnen 50, die wie bei der vorhergehenden Ausführungsform verlaufen, zur zusätzlichen formschlüssigen Verzahnung vorhanden sind.

Die Ausführungsform gemäß Fig. 3 eignet sich besonders für solche Beineinklemmeinrichtunngen 10, bei denen der Klemmkopf 16 durch beispielsweise vertikales, aber auch in anderer Richtung mögliches, Verfahren in Eingriff mit den beiden Vorderbeinen 36 gebracht wird. Diese Bewegung kann man sich als Vertikalbewegung mittels der ersten Zylinder-Kolben-Einheit 26 vorstellen, wenn die Beineinklemmelemente 32' und 34' auf einem Klemmkopf 16, entsprechend der Ausführungsform gemäß Figuren 1/2 angebracht sind. Man erkennt, daß sich die Ausbuchtung 48 durch diese Aufwärtsbewegung selbsttätig zwischen die beiden Vorderbeine 36 schiebt, ohne daß die in ihrer Offenstellung befindlichen Klemmarme 34' - (angedeutet durch die beiden strichpunktierten Gerade 52 in Fig. 3) im Wege wären.

Beide bisher geschilderten Ausführungsformen kann man entweder in Weiterbewegungsrichtung W verfahrbar ausgestalten, wie vorstehend genauer beschrieben, oder auch insoweit stationär ausgestalten. Im letztgenannten Fall muß das Enthäuten stattfinden, während das betreffende Rind 2 stillsteht und nicht längs der Rohrbahn 6 weitergefördert wird. Die Ausführungsform gemäß Fig. 3 eignet sich besonders für die insoweit stationäre Ausbildung. Man erkennt ferner anhand von Fig. 1, daß die Vertikalbewegung des Ansatzteils 24 zur Einstellung auf das jeweilige Rind 2 oder auch zum In-Kontakt-Bringen der Beineinklemmelemente 32' und 34' mit den Vorderbeinen 36 wichtiger ist als die horizontale Bewegungsmöglichkeit zwischen dem Ansatzteil 24 und dem Klemmkopf 16. Auf die letztgenannte Bewegungsmöglichkeit kann bei einigen Ausführungsformen verzichtet werden.

Die in Fig. 4 gezeichnete Elektrodenansetzeinrichtung 60 weist einen Elektrodenkopf 62 auf, der in Weiterbewegungsrichtung des Rinds 2 nebeneinander mit zwei zum Rind 2 vorragenden Elektroden 64 versehen ist. Der Elektrodenkopf 62 ist von einem Arm 66 getragen, der im Betriebszustand der Elektrodenansetzeinrichtung 60 im wesentlichen senkrecht nach unten hängt. Mit seinem oberen Endbereich ist der Arm 66 an einem Wagen 68 befestigt, der in Weiterbewegungsrichtung des Rinds 2 vorwärts und rückwärts relativ zu einer Basis 70 verfahrbar ist. Die Basis 70 ist in nicht gezeichneter Weise an der Schlachthofdecke befestigt. Mittels einer Zylinder-Kolben-Einheit 72 läßt sich ein Bolzen 74 ausfahren, der von einem der bereits geschilderten Mitnehmer der nicht gezeichneten Förderkette mitgenommen wird, so daß bei ausgefahrenem Bolzen 74 der Wagen 68 mitsamt daran hängendem Arm 66 in Weiterbewegungsrichtung W des Rinds 2 mitgenommen wird. Die Rückwärtsbewegung erfolgt, wie im Zusammenhang mit Fig. 1 beschrieben, mittels einer nicht dargestellten Zylinder-Kolben-Einrichtung.

Der Arm 66 ist um eine parallel zur Rohrbahn 6 verlaufende Achse schwenkbar am Wagen 68 befestigt. Zum Schwenken des Arms 66 ist eine Zylinder-Kolben-Einheit 76 vorgesehen. Man erkennt, daß durch Schwenken des Arms 66 im Uhrzeigersinn die Elektroden 64 vom Lenden-Rücken-Bereich des Rinds 2 entfernbar und durch entgegengesetztes Schwenken des Arms 66 mit diesem Rückenbereich des Rinds 2 in Kontakt bringbar sind. Der Arm 66 ist teleskopartig aufgebaut und kann mittels der Zylinder-Kolben-Einheit 78 in seiner Länge verändert werden. Aufgrund dieser Längenveränderung ist es möglich, die Elektroden 64 unabhängig von der Größe des jeweiligen Rinds 2 immer in etwa zu der geeignetsten Stelle am Rücken des Rinds 2 zu bringen.

Die Arbeitsweise der Elektrodenansetzeinrichtung ist folgende:

Zunächst wird, während sich das Rind 2 weiterbewegt, mit dem Enthäuten begonnen. Sobald die Haut bis über die Lendenwirbel hinweg abgezogen ist, wird der Bolzen 74 ausgefahren, so daß der Wagen 68 mitsamt daran hängendem Arm 66 durch die nicht gezeichnete Förderkette entsprechend der Bewegungsgeschwindigkeit des Rinds 2 mitgenommen wird.

Unmittelbar anschließend wird der Arm entgegen dem Uhrzeigersinn geschwenkt, bis die Elektroden 64 mit Anpreßkraft im Lenden-Rücken-Bereich des Rinds 2 anliegen. Dann wird eine elektrische Wechselspannung von etwa 40 bis 50 V angelegt, was eine Kontraktion der Rückenmuskeln in diesem Bereich zur Folge hat. Diese Spannungsanlegung wird beigehalten, bis die Haut über die Schultern und gegebenenfalls über den Kopf des Rinds 2 gezogen ist; denn in diesem Moment wirkt die größte Kraft auf die Wirbelsäule des Rinds 2. Anschließend wird der Arm 66 im Uhrzeigersinn zurückgeschwenkt. Es folgt das Zurückfahren des Wagens 68, und ein neuer Zyklus kann beginnen.

Es versteht sich, daß zur Verbesserung des Enthäutens von Schlachttieren entweder nur eine Beineinklemmeinrichtung oder nur eine Elektrodenansetzeinrichtung oder beide Einrichtungen zusammen vorhanden sein können. Im letztgenannten Fall befinden sich beide Einrichtungen sinnvollerweise einander gegenüber im wesentlichen an der gleichen Stelle der Rohrbahn 6, so daß sie gleichzeitig an dem gleichen Rind 2 in Aktion treten können.

Man kann gegen Ende des Enthäutungsvorgangs, wenn die Haut vom Schulterbereich oder vom Kopf des Rinds 2 abgezogen wird und dadurch die höchste zusätzliche Zugebelastung durch das Enthäuten auf die Aufhängungstraghaken kommt, die Beineinklemmeinrichtung 10 ein kleines Stück nach oben verfahren und dadurch die nicht gezeichneten Traghaken entlasten. Man hat nämlich beobachtet, daß vereinzelt Traghaken unter der Wirkung der geschilderten Enthäutungskräfte verbogen werden.

In den Figuren 1 und 4 sind Rinder 2 mit Rinderköpfen gezeichnet. Es versteht sich jedoch, daß die beschriebenen Hilfsvorrichtungen auch bei der Enthäutung von Rindern mit zuvor abgesetztem Kopf eingesetzt werden können.

In Fig. 4 ist mit 80 eine Tierkörperlängenfeststelleinrichtung bezeichnet, die drei im Abstand übereinander angeordnete Ultraschallsensoren aufweist. Aus der Information, welcher der Sensoren -von unten nach oben gezählt - als erster das Vorhandensein des Schlachttierkörpers in seinem Ultraschallwellenweg feststellt, ergibt sich mit ausreichender Genauigkeit die Tierkörperlänge. Dann weiß man aus Erfahrung mit ausreichender Genauigkeit, wieviel höher man die Arbeitsposition des Elektrodenkopfes 62 einstellen muß. Das gleiche gilt analog, wenn man die Tierkörperlängenfeststelleinrichtung 80 stattdessen oder zusätzlich mit der Beineinklemmeinrichtung 10 kombiniert. Auch hier kann die Tierkörperlängenfeststelleinrichtung 80 die einzustellende Position der Beineinklemmelemente steuern.

## Ansprüche

1. Hilfsvorrichtung beim Enthäuten von hängenden Schlachttieren, insbesondere Rindern, gekennzeichnet durch eine mechanisierte Beineinklemmeinrichtung (10) für die beiden herabhängenden Vorderbeine (36) des jeweiligen Schlachttiers (2).

2. Vorrichtung nach Anspruch 1, dadurch gekennzeichnet, daß die Beineinklemmeinrichtung - (10) eine mittels einer Zylinder-Kolben-Einheit (40) bewegbare Klemmbacke (34) sowie eine Widerlagerbacke (32) aufweist.

3. Vorrichtung nach Anspruch 2, dadurch gekennzeichnet, daß die Klemmbacke (34) oder die Widerlagerbacke (32) um eine im wesentlichen in Beinerstreckungsrichtung verlaufende Achse (44) - schwenkbar ist.

4. Vorrichtung nach Anspruch 1, dadurch gekennzeichnet, daß die Beineinklemmeinrichtung - (10) zwei mittels einer Zylinder-Kolben-Einheit (40'), vorzugsweise schwenkbar, aufeinander zu und voneinander weg bewegbare, vorzugsweise am Ende gekrümmte, Klemmarme (34') sowie ein Widerlagerteil (32') aufweist, das einen ausgebuchteten Beinanlagebereich (48) aufweist.

5. Vorrichtung nach einem der Ansprüche 1 bis 4, dadurch gekennzeichnet, daß ein Beineinklemmelemente (32,34) tragender Klemmkopf (16) vorgesehen ist und daß der Klemmkopf (16) aufwärts und abwärts und/oder quer zu einer Weiterbewegungsrichtung der Schlachttiere (2) verfahrbar ist, vorzugsweise jeweils mittels einer Zylinder-Kolben-Einheit (24; 28).

6. Vorrichtung nach einem der Ansprüche 1 bis 5, dadurch gekennzeichnet, daß ein Beineinklemmelemente (32, 34) tragender Klemmkopf (16) vorgesehen ist und daß der Klemmkopf (16) in einer Weiterbewegungsrichtung der Schlachttiere (2) verfahrbar ist, vorzugsweise durch Mitnahme durch das Schlachttier (2) in Vorwärtsrichtung und mittels einer Zylinder-Kolben-Einheit in Rückwärtsrichtung.

7. Vorrichtung nach einem der Ansprüche 1 bis 6, dadurch gekennzeichnet, daß sie auf dem Schlachthofboden (18) montiert ist.

8. Hilfsvorrichtung beim Enthäuten von hängenden Schlachttieren, insbesondere Rindern, insbesondere nach einem der Ansprüche 1 bis 7, gekennzeichnet durch eine mechanisierte Elektrodenansetzeinrichtung (60), mit der sich mindestens eine Elektrode (64) im Rückenbereich des jeweiligen Schlachttiers (2) ansetzen läßt.

9. Vorrichtung nach Anspruch 8, dadurch gekennzeichnet, daß ein von einem Arm (66) getragener Elektrodenkopf (62) der Elektrodenansetzeinrichtung (60) um eine Achse schwenkbar ist, die im wesentlichen parallel zu einer Weiterbewegungsrichtung der Schlachttiere (2) verläuft.

10. Vorrichtung nach Anspruch 8 oder 9, dadurch gekennzeichnet, daß ein (der) Elektrodenkopf (62) der Elektrodenansetzeinrichtung (60) aufwärts und abwärts verfahrbar ist, vorzugsweise mittels einer Zylinder-Kolben-Einheit (78).

11. Vorrichtung nach einem der Ansprüche 8 bis 10, dadurch gekennzeichnet, daß ein (der) Elektrodenkopf (62) der Elektrodenansetzeinrichtung - (60) in einer Weiterbewegungsrichtung der Schlachttiere (2) bewegbar ist, vorzugsweise durch Mitnahme durch den Schlachttierförderer in Vorwärtsrichtung und mittels einer Zylinder-Kolben-Einheit in Rückwärtsrichtung.

12. Vorrichtung nach einem der Ansprüche 8 bis 11, dadurch gekennzeichnet, daß sie hängend montiert ist.

13. Vorrichtung nach einem der Ansprüche 1 bis 12, gekennzeichnet durch eine Tierkörperlängenfeststelleinrichtung (80), die die höhenmäßige Arbeitsposition der Beineinklemmeinrichtung (10) und/oder der Elektrodenansetzeinrichtung (60) steuert.

0 233 655

FIG. 1

FIG. 2

FIG. 3

FIG. 4